(19) **Europäisches Patentamt / European Patent Office / Office européen des brevets**

(11) **EP 2 692 136 B1**

(12) **EUROPEAN PATENT SPECIFICATION**

(45) Date of publication and mention
of the grant of the patent:
**16.08.2017 Bulletin 2017/33**

(21) Application number: **11716330.3**

(22) Date of filing: **31.03.2011**

(51) Int Cl.:
*H04N 19/61* (2014.01)     *H04N 19/13* (2014.01)
*H04N 19/44* (2014.01)     *H04N 19/42* (2014.01)
*H04N 19/436* (2014.01)

(86) International application number:
**PCT/US2011/000578**

(87) International publication number:
**WO 2012/134421 (04.10.2012 Gazette 2012/40)**

(54) **TECHNIQUES FOR CONTEXT-ADAPTIVE BINARY DATA ARITHMETIC CODING (CABAC) DECODING**

VERFAHREN FÜR DIE DEKODIERUNG VON KONTEXTADAPTIVER ARITHMETISCHER BINÄRDATENKODIERUNG (CABAC)

TECHNIQUES DE DÉCODAGE DE CODAGE ARITHMÉTIQUE DE DONNÉES BINAIRES ADAPTATIF SELON LE CONTEXTE (CABAC)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.02.2014 Bulletin 2014/06**

(73) Proprietors:
• **Thomson Licensing**
**92130 Issy-les-Moulineaux (FR)**
• **Goedeken, Richard Edwin**
**Santa Clarita, CA 91387 (US)**

(72) Inventor: **GOEDEKEN, Richard, Edwin**
**Santa Clarita, CA 91387 (US)**

(74) Representative: **de la Fouchardière, Marie-Noëlle et al**
**TECHNICOLOR**
**1-5, rue Jeanne d'Arc**
**92130 Issy-les-Moulineaux (FR)**

(56) References cited:
• **MARPE D ET AL: "Context-based adaptive binary arithmetic coding in the H.264/AVC video compression standard", IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 620-636, XP011099255, ISSN: 1051-8215, DOI: 10.1109/TCSVT.2003.815173**
• **WEI YU ET AL: "A High Performance CABAC Decoding Architecture", IEEE TRANSACTIONS ON CONSUMER ELECTRONICS, IEEE SERVICE CENTER, NEW YORK, NY, US, vol. 51, no. 4, 1 November 2005 (2005-11-01), pages 1352-1359, XP002576043, ISSN: 0098-3063, DOI: 10.1109/TCE.2005.1561867**
• **TEXAS INSTRUMENTS: "Parallel CABAC", ITU-T SG16 MEETING; 22-4-2008 - 2-5-2008; GENEVA,, no. T05-SG16-C-0334, 11 April 2008 (2008-04-11), XP030003826,**
• **SZE (MIT) V: "Massively Parallel CABAC", 38. VCEG MEETING; 89. MPEG MEETING; 1-7-2009 - 8-7-2009; LONDON,GENEVA; (VIDEO CODING EXPERTS GROUP OF ITU-T SG.16),, no. VCEG-AL21, 3 July 2009 (2009-07-03), XP030003702,**

**EP 2 692 136 B1**

- YAHYA JAN ET AL: "CABAC Accelerator Architectures for Video Compression in Future Multimedia: A Survey", 20 July 2009 (2009-07-20), EMBEDDED COMPUTER SYSTEMS: ARCHITECTURES, MODELING, AND SIMULATION, SPRINGER BERLIN HEIDELBERG, BERLIN, HEIDELBERG, PAGE(S) 24 - 35, XP019124857, ISBN: 978-3-642-03137-3 paragraph [0002]

- "Text of ISO/IEC 14496-10 FDIS Advanced Video Coding", 1. AVC MEETING; 13-11-1990 - 16-11-1990; THE HAGUE ; (CCITT SGXVEXPERT GROUP FOR ATM VIDEO CODING), XX, XX, no. N5555, 5 June 2003 (2003-06-05), XP030012739,

**Description**

FILED OF THE INVENTION

The present invention generally relates to video data decoders and encoders, and more particularly to techniques for optimizing such decoders and encoders.

BACKGROUND OF THE INVENTION

In the related art a recent effort is performed to parallelize the processing tasks and in particular video processing tasks. This becomes a critical task as, on one hand the video processing is very computationally expensive, but on the other hand, the processing power of a single processor cannot be further increased. A prime example is the H.264 video standard published by the ITU-T in March 2008 (hereinafter the "H.264 standard"). In order to support advanced applications, decoders and encoders compliant with the H.264 standard must be parallelized. Parallelization typically includes breaking a single task into multiple sub-tasks and processing sub-tasks simultaneously.

However, the execution of the H.264 decoders/encoders cannot be entirely parallelized due to the context-adaptive binary data arithmetic coding (CABAC). The CABAC is a data compression/coding process carried out by the H.264 video decoder. The CABAC process is entirely sequential, i.e., for each process step, the required input data is dependent upon the output data from the previous step. Due to this dependency, the CABAC decoding process of a chunk of compressed data cannot be split into sub-tasks and run on parallel processors.

One such CABAC decoding process is performed during the transform coefficients decoding process, where an array of 16 or 64 transform coefficients is decompressed from a CABAC data stream. The overall order of operations for decoding a 4x4 or 8x8 sub-macroblock array during this transform coefficients decoding process includes the following steps: 1) decoding the total number of non-zero transform coefficients; 2) decoding the index value of the last non-zero transform coefficient; 3) decoding a binary map giving the index values of all non-zero transform coefficients; and 4) for each non-zero transform coefficient in the map: decode one bit at a time until either a zero-bit is encountered or a specified number of bits / (e.g.,) I = 14) have been decoded; and if a specified number of bits were decoded, then decoding the coefficient value using a bypass encoded (uncompressed) Exp-Golomb code.

The last step (4) is typically performed by running a loop on a general-purpose CABAC bit decoding function until a specified bit count or a zero-bit is encountered. The pseudo-code for executing this step may be presented as follows:

```
do {
bit = decode_binary_decision (CABAC, bitstream, context) ;
symbol = symbol + 1;
} while ((bit == 1) && (symbol < (unary_max - 1)));
```

The decode_binary_decision is a general-purpose CABAC bit decoding function where its input parameters are a CABAC object, a compressed bitstream to be decoded, and a context associated with the type of decoded data. There are many different types of data included in the compressed data stream. For example, such data types include motion vectors, macroblock modes, prediction types, and flags. Each different type of data uses its own predefined context in the CABAC decoder. The decoder decodes each bit based on its context.

Consequently, for a high performance H.264 video decoder designed to run on parallel processing hardware, the CABAC decoding is a performance bottleneck which in many cases determines the overall performance of the video decoder.

It would be, therefore, advantageous to provide a solution for accelerating the execution of a CABAC decoding process.

SUMMARY OF THE INVENTION

Certain embodiments of the invention include a method for performing a transform coefficients decoding process. The method comprises decoding consecutive bits of an input compressed bitstream; computing a first symbol value using a number of decoded bits; returning the first symbol value, if a total number of decoded bits is less than a specified bit count; computing a second symbol value, if the total number of decoded bits equals the specified bit count; and returning the second symbol value.

Certain embodiments of the invention also include a decoder for decoding transform coefficients. The decoder comprises a context-adaptive binary data arithmetic coding (CABAC) decoder for decoding consecutive bits of an input compressed bitstream; a first adder for computing a first symbol value by adding one to a number of decoded bits; a comparator for determining if a total number of decoded bits equal to a specified bit count; an Exponential-Golomb code decoder for decoding the input compressed bitstream if the total number of decoded bits equal to the specified bit count; and a second adder for generating a second symbol value by adding the first symbol value to a result generated by the Exponential-Golomb code decoder.

BRIEF DESCRIPTION OF THE DRAWINGS

The subject matter that is regarded as the invention is particularly pointed out and distinctly claimed in the claims at the conclusion of the specification. The foregoing and other features and advantages of the invention will be apparent from the following detailed description taken in conjunction with the accompanying drawings.

Fig. 1 is a flowchart illustrating a method for optimizing the transform coefficient decoding process as implemented in accordance with an embodiment of the invention.
Fig. 2 is a flowchart illustrating a process for decoding bits having the same context implemented in accordance with an embodiment of the invention.
Fig. 3 is a flowchart illustrating a process for decoding consecutive bits implemented in accordance with an embodiment of the invention.
Fig. 4 is a block diagram of decoder constructed in accordance with an embodiment of the invention.

DETAILED DESCRIPTION OF THE INVENTION

It is important to note that the embodiments disclosed by the invention are only examples of the many advantageous uses of the innovative teachings herein. In general, statements made in the specification of the present application do not necessarily limit any of the various claimed inventions. Moreover, some statements may apply to some inventive features but not to others. In general, unless otherwise indicated, singular elements may be in plural and vice versa with no loss of generality. In the drawings, like numerals refer to like parts through several views.

In accordance with the principles of the invention the techniques disclosed herein are performed during the transform coefficients decoding process defined in the H.264 standard, where an array of 16 or 64 transform coefficients is decompressed from a CABAC bitstream. Specifically, the disclosed techniques are designed to optimize the sub-process of decoding one bit at a time until either a zero-bit is encountered or a specified bit count is reached. This sub-process is performed for each non-zero transform coefficient.

In accordance with the principles of the invention the method is achieved by decoding consecutive bits with the same value, using the same CABAC context, until a specified bit count or a zero-bit is encountered. This functionality can be presented using the following pseudo code:

*symbol = 1 + decode_consecutive (cabac, bitstream, context, 1, unary_max - 1)*

It should be appreciated that two levels of optimization are achieved using this approach. A first level is reducing the execution overhead by eliminating the repetitive calls to the general-purpose CABAC bit decoding function (*decode_binary_decision*) and a second level of optimization is achieved by decoding consecutive bits with the same value.

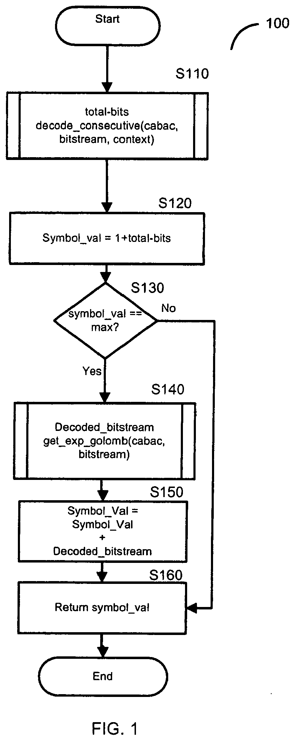

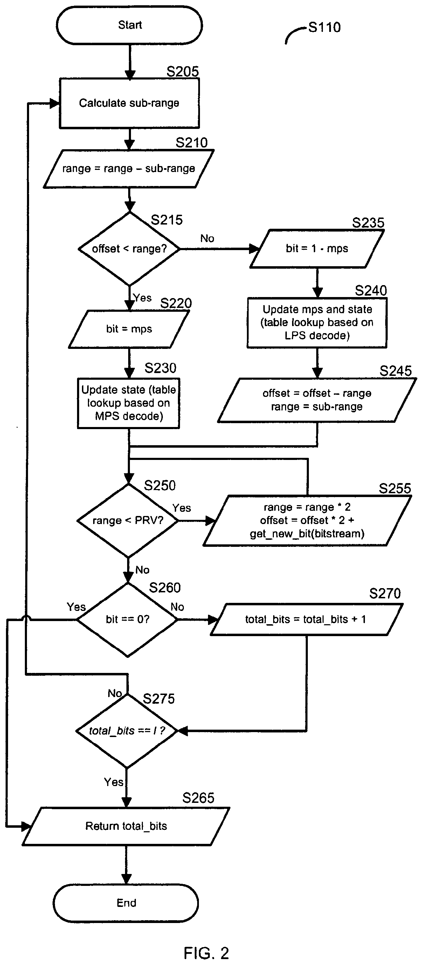

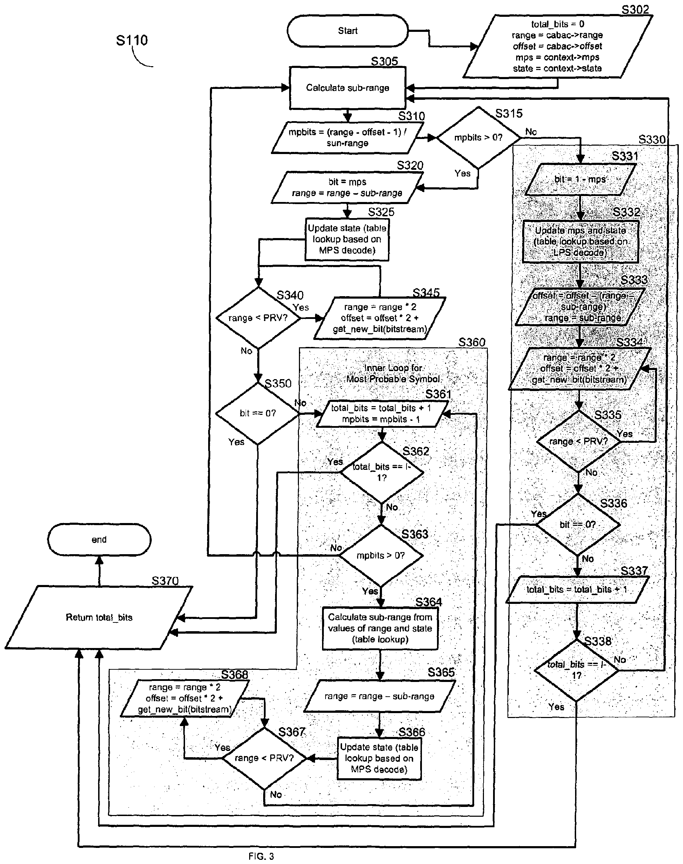

Fig. 1 shows an exemplary and non-limiting flowchart 100 illustrating the method for optimizing the transform coefficients decoding process as implemented in accordance with an embodiment of the invention. At S110, a process (*decode_consecutive*) for decoding consecutive bits with the same context value is performed. This process receives three input parameters: a reference to the context for which the bit will be decoded, a reference to the compressed bitstream and a reference to the CABAC decoder object including the range and offset integer values. Step S110 generates a decompressed bitstream and returns the number of decoded bits. In accordance with an embodiment of the invention, the *decode_consecutive* process decodes, at each iteration, multiple same-valued bits from the decoded CABAC bitstream using the same context. In accordance with another embodiment, the *decode_consecutive* process is based on computing a minimum number of consecutive most probable symbol (MPS) bits and then advancing the state machine of the CABAC decoder for each bit in a tight loop without checking the value of each bit. The execution of S110 is described in greater detail below with reference to Figs. 2 and 3.

At S120, a symbol value is computed as the total number of decoded bits by the *decode_consecutive* process plus 1. That is, symbol value = total bits + 1. At S130, it is checked if the total number of decoded bits equal to a specified bit count (I). If so, execution continues with S140; otherwise, the symbol value is returned (S160) and execution ends.

At S140, the compressed bitstream is decoded using an Exponential-Golomb code. At S150, the symbol value is computed by adding the symbol value computed at S120 to the decoded bitstream generated at S140. Thereafter, execution continues with S160. As can be understood from the above description and flowchart 100, the process *decode_consecutive* is called only once and not for each bit in the bitstream, thereby accelerating the execution of the transform coefficients decoding process.

Fig. 2 shows an exemplary and non-limiting flowchart S110 illustrating the *decode_consecutive* process for decoding bits having the same context as implemented in accordance with an embodiment of the invention. As mentioned above the input parameters of the process are the context, bitstream, and CABAC decoder object including the range and offset integer values. The process generates a decompressed bitstream and returns the number of decoded bits.

A data type of a bitstream uses its own context in a CABAC decoder. Each context in the CABAC decoder has two state information parameters: a value of a most probable symbol (MPS) which may be either '1' or '0' for the context and a state integer which designates the relative probability of the most probable symbol. It is useful to distinguish between the MPS and a least probable symbol (LPS) for the purpose of identifying binary decisions as either MPS or LPS, rather than '0' or '1'. The CABAC decoder keeps two additional parameters: a range integer and an offset integer which are required to decode any bits regardless of context. The range and offset values encapsulate the lowest level state information about the CABAC decoder. These two values must be used as a pair, neither has any meaning without the other.

At S205, a sub-range value is computed using the values of the context's state parameter and the range parameter of the CABAC. This step includes computing a rough range value, and finding a sub-range value in a lookup table using the rough range and context state values. One possible implementation for step S205 can be found in the H.264 standard page 238. It should be noted that when a particular CABAC context's state is heavily biased towards the most probable symbol, the value of the sub-range is relatively small. At S210, a new range value is computed by subtracting the sub-range value from the range value of the CABAC decoder (i.e., range = range - sub-range).

At S215, a check is made to determine if the offset value of the CABAC decoder is less than the computed new range value. If so, at S220, a decompressed output bit having a value equals to the MPS value is returned. Then, at S230, the context's state parameter is updated to indicate that the most probable symbol is even more probable, for example, by increasing the value of the state parameter.

If S215 results with a negative answer, execution continues with S235 where a decompressed output bit having a value equals to a LPS value is returned (i.e., LPS value = 1 - MPS value). Thereafter, at S240, the state parameter of the context is updated to indicate that the most probable symbol is less probable than before, and the value of the most probable symbol may be inverted. At S245, a new offset value is computed by subtracting the range value from the offset value. In addition, the range value is set to the sub-range value. It should be apparent to a person skilled in the art that the steps S215, 220 and 235 are based on arithmetic coding, which allows decoding bits using the offset and range values and known probabilities of the MPS and LPS.

At S250, a check is made to determine if the new range value is less than a predefined range value (PRV). If so, at S255, both the range and offset values are multiplied by 2 and adding to the offset value a new bit that was read from the compressed bitstream. Thereafter, execution returns S250. In one embodiment the PRV is set to 256 as defined in the H.264 standard. It should be noted that steps S250 and S255 are part of a renormalization process performed by a CABAC decoder.

If S250 results with a 'No' answer, at S260, a check is made to determine if a zero-bit was encountered. If so, at S265, the total number of bits that were decoded is returned. In addition, the range and offset parameters of the CABAC decoder as well as the context's most probable symbol and state may be updated to their computed values. If a zero-bit was not encountered, then at S270, the number of total bits that were decoded is incremented by 1. At S275, it is checked if the number of total bits is equal to the specified bit count (I) for the number of bits that should be decoded minus 1 (e.g., I - 1), and if so execution continues with S265; otherwise, execution returns to S205.

Fig. 3 shows an exemplary and non-limiting flowchart S110 illustrating the *decode_consecutive* process implemented in accordance with another embodiment of the invention. The process generates a decompressed bitstream and returns the number of decoded bits. In this embodiment the decoding is based on computing a minimum number of consecutive most probable symbol bits and then advancing the state machine of the CABAC decoder for each bit in a tight loop without having to check for the value of each bit.

At S302, input parameters including context and its state and MPS parameters, a compressed bitstream, and a CABAC decoder object including the range and offset integer values are received. At S305, a sub-range value is calculated using the values of the state parameter of the context and the range parameter of the CABAC decoder. At S310, a minimum number of consecutive most probable symbol bits (mpbits) in the input bitstream is computed using the sub-range, range and offset values. In one embodiment, the mpbits is computed using the following equation:

$$mpbits = \{(range - offset) - 1\} / sub\text{-}range.$$

At S315, a check is made to determine if the mpbits value is greater than 0, i.e., if there is at least one most probable symbol bits in the bitstream. If so, execution continues with S320; otherwise, at S330 bits in the bitstream are decoded, each bit at a time, according to the LPS value.

Specifically, step S330 includes returning a decompressed output bit having a value equals to the LPS value (S331); updating the context's state and MPS value to indicate that the most probable symbol is less probable than before (S332); computing a new offset value by subtracting the range value from the offset value; setting the range value to the sub-range value (S333); performing a renormalization process (S334 and S335); when the renormalization process is completed, checking whether a zero-bit was encountered (S336), and if so, proceeding to S370 where the total number of bits that were decoded is returned; otherwise, incrementing the number of total bits that were decoded by 1 (S337); and checking if the total number of bits is equal to a specified bit count for the number of bits (I) that should be decoded minus 1 (S338), and if so continuing with S370; otherwise, returning to S305.

Execution reaches to S320 if there is at least one bit with a most probable symbol (MPS) value. Thus, a decompressed output bit having a value equals to the MPS value is returned. In addition, at S320 a new range value is calculated. At S325, the context's state parameter is updated to indicate that the most probable symbol is even more probable, for example, by increasing the value of the state parameter. At S340 and S345 a renormalization process is performed as described above.

If the new range value is equal to or bigger than a PRV, at S350, a check is made to determine if a zero-bit was encountered. If so, at S370, the total number of bits that were decoded is returned. In addition, the range and offset parameters of the CABAC decoder as well as the context's most probable symbol and state may be updated to their computed values. If no zero-bit was encountered, execution continues with S360 where an inner loop procedure for handling MPS consecutive bits having the same value is performed.

Specifically, S360 allows for advancing the state machine of the CABAC decoder for each bit in the MPS consecutive bits without checking the value of each bit. This is particularly useful in cases where large-valued transform coefficients are encoded with unary codes. In such cases, each bit has a high probability of being '1' and a low probability of being '0'. For example, if a transform coefficient with a value of 10 is encoded with unary codes, the resulting binary data is 1111111110. During the execution of S360 the CABAC decoder is advanced without decoding the 1-bits, thereby significantly reducing the time required to decode the entire bitstream.

The execution of S360 includes incrementing the number of total bits that were decoded by 1 and decrementing the mpbits value by 1 (S361); checking if the total number of bits is equal to a specified bit count for the number ofbits (I) that should be decoded minus 1 (S362); and if so continuing with S370; otherwise, checking if the mpbits value is greater than 0 (S363), and if so calculating a sub-range value using the range and state values (S364); computing a new range value by subtracting the sub-range value from the range value (S365); updating context's state parameter to indicate that the most probable symbol is even more probable (S366); performing a renormalization process (S367, S368); and, returning to S361 if the new range value is bigger than or equal to the PRV.

It should be appreciated that the optimization technique described herein is particular useful in H.264 high quality video applications, as typically in such application a video stream is encoded at a high bit rate. The encoded stream contains many large-valued transform coefficients in the residual data. This residual data occupies a large portion of the total data encoded in high-quality bitstreams. Furthermore, large-valued transform coefficients are encoded with unary codes, each bit has a high probability of being '1' and a low probability of being '0'. As mentioned in greater detail above, step S360 was designed to accelerate the decoding of unary codes, thereby of large-valued transform coefficients.

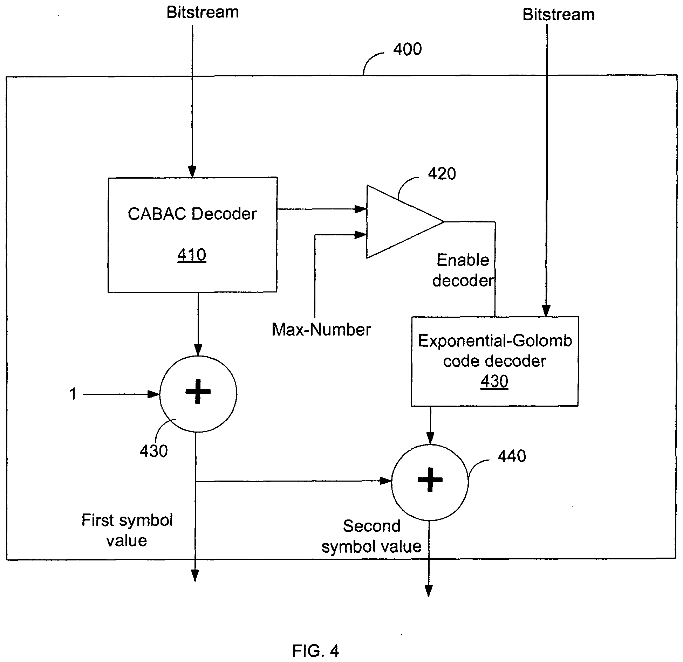

Fig. 4 is an exemplary and non-limiting diagram of a decoder 400 for decoding transform coefficients implemented in accordance with an embodiment of the invention. The decoder 400 includes a context-adaptive binary data arithmetic coding (CABAC) decoder 410 for decoding consecutive bits of an input compressed bitstream. The CABAC decoder 110 performs the *decode_consecutive* described in detail above. The CABAC decoder 110 can operate in two modes. The first mode includes decoding multiple same-valued bits from the decoded CABAC bitstream using the same context. The second mode include computing a minimum number of consecutive most probable symbol (MPS) bits and then advancing the state machine of the CABAC decoder for each bit in a tight loop without checking the value of each bit.

The decoder 400 also comprises a first adder 430 for computing a first symbol value by adding the integer number one to a total number of decoded bits decoded by the CABAC decoder 410; a comparator 420 for determining if the total number of decoded bits equal to a specified bit count; an Exponential-Golomb code decoder 430 for decoding the input compressed bitstream if the total number of decoded bits equal to the specified bit count and a second adder 440 for generating a second symbol value by adding the first symbol value to a result generated by the Exponential-Golomb code decoder 430.

The foregoing detailed description has set forth a few of the many forms that the invention can take. It is intended that the foregoing detailed description be understood as an illustration of selected forms that the invention can take and not as a limitation to the definition of the invention. It is only the claims, including all equivalents that are intended to define the scope of this invention.

Most preferably, the principles of the invention are implemented as any combination of hardware, firmware and software. Moreover, the software is preferably implemented as an application program tangibly embodied on a program storage unit or computer readable medium. One of ordinary skill in the art would recognize that a "machine readable medium" is a medium capable of storing data and can be in a form of a digital circuit, an analogy circuit or combination thereof. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such computer or processor is explicitly shown. In addition, various other peripheral units may be connected to the computer platform such as an additional data storage unit and a printing unit.

**Claims**

1. A method for decoding transform coefficients, comprising
   decoding consecutive bits of an input compressed bitstream using a CABAC decoder, said consecutive bits being associated with a transform coefficient to be decoded, said decoding comprising computing (S310) a minimum number of consecutive most probable symbol bits (mpbits) as mpbits=(range - offset - 1)/subrange, wherein range and offset define a range and offset of a current state of the CABAC decoder, and the subrange is calculated using the range and context values of the current state of the CABAC decoder, and said decoding further comprising determining (S360) a decoded value of said consecutive bits according to said minimum number of consecutive most probable symbol bits;
   computing a first value by adding one to the decoded value of said consecutive bits (S120); and either returning the first value, if a total number of the decoded symbol bits is less than a specified bit count (S160); or computing a second value, if the total number of the decoded symbol bits equals the specified bit count comprising decoding the input compressed bitstream using an Exponential-Golomb code (S140) and adding the first value to a result generated by the Exponential-Golomb code decoding (S150); and
   returning the second value (S160);
   wherein determining said decoded value further comprises for the minimum number of consecutive most probable symbol bits decoding most probable symbol bits with the same CABAC context and without checking the value of each most probable symbol bit (S360).

2. The method of claim 1, further comprising
   receiving a context value, the input compressed bitstream and a CABAC decoder object, wherein the CABAC decoder object includes said range value and said offset value;
   computing said subrange value;
   computing a new range value by subtracting the subrange value from the range value;
   checking if the offset value is less than the new range value;
   returning a decompressed output symbol bit having a value equal to a most probable symbol bit (MPS) value, if the offset is less than the new range value; and
   returning a decompressed output symbol bit having a value equal to a least probable symbol bit (LPS) value, if the offset is bigger or equal to the new range value.

3. The method of claim 2, further comprising
   performing a renormalization process;
   checking if a zero bit is encountered;
   returning a total number of the decoded bits, if a zero bit is encountered; incrementing a counter counting the total number of the decoded bits, if a zero bit is not encountered; and
   returning the total number of the decoded bits, if a specified maximum number of bits were decoded.

4. The method of claim 3, wherein performing the renormalization process comprises:

   consecutively reading new bits from the input compressed bitstream until a range value is bigger than or equal to a predefined range value (PRV).

**5.** The method of claim 1, wherein said decoding further comprises:

advancing a state machine of the CABAC decoder for each bit in the consecutive most probable symbol bits without checking the value of each bit.

**6.** The method of claim 5, further comprising:

receiving a context value, the input compressed bitstream, and a CABAC decoder object, wherein the CABAC decoder object includes the range value and the offset value;
computing the subrange value using the range value and the offset value;
returning a decompressed output bit having a value equals to a most probable symbol bit value, if the minimum number of consecutive most probable symbol bits is greater than zero; and
returning a decompressed output bit having a value equals to a least probable bit value, if the minimum number of consecutive most probable bits is equal to zero.

**7.** The method of claim 6, wherein returning the decompressed output bit having a value equal to the most probable symbol bit value, further comprising:

computing a new range value by subtracting the range value from the subrange value;
performing a normalization process;
upon completion of the normalization process, checking if a zero bit is encountered in the consecutive most probable symbol bits;
iteratively advancing the state machine of the CABAC decoder for each bit in most probable consecutive symbol bits, if a zero bit is not encountered; and
returning a total number of decoded bits when the zero bit is encountered or a specified bit count is achieved.

**8.** A decoder for decoding transform coefficients, comprising:

a context-adaptive binary data arithmetic coding (CABAC) decoder for decoding consecutive bits of an input compressed bitstream, said consecutive bits being associated with a transform coefficient to be decoded, and said decoder comprising a hardware module for computing a minimum number of consecutive most probable symbol bits (mpbits) as mpbits=(range - offset - 1)/subrange, wherein range and offset define a range and offset of the current state of the CABAC decoder and the subrange is calculated using the range and context values of the current state of the CABAC decoder, and a hardware module for determining a value of said consecutive bits according to said minimum number of consecutive most probable symbol bits;
a first adder for computing a first value by adding one to the decoded value of said consecutive bits;
a comparator for determining if a total number of the decoded bits equal to a specified maximum number;
a hardware module for returning the first value that is activated when said comparator outputs an information that the total number of the decoded bits is less than the specified maximum number;
an Exponential-Golomb code decoder for decoding the input compressed bitstream that is activated when said comparator outputs an information that the total number of the decoded bits equal to the specified bit count; and
a second adder for generating a second value by adding the first value to a result generated by the Exponential-Golomb code decoder, and

wherein, for the minimum number of consecutive most probable symbol bits, said hardware module for determining is further configured to decode most probable symbol bits with the same CABAC context and without checking the value of each most probable symbol bit (S360).

**9.** The decoder of claim 8, further comprising:

a hardware module for receiving a context value, the input compressed bitstream, and a CABAC decoder object, wherein the CABAC decoder object includes the range value and the offset value;
a hardware module for computing the subrange value;
a hardware module for computing a new range value by subtracting the range value from the subrange value;
a hardware module for checking if the offset value is less than the new range value;
a hardware module for returning a decompressed output bit having a value equal to a most probable symbol bit (MPS) value, if the offset is less than the new range value; and
a hardware module for returning a decompressed output bit having a value equal to a least probable symbol bit (LPS) value, if the offset is bigger or equal to the new range value.

10. The decoder of claim 9, further comprising:

a hardware module for performing a renormalization process;
a hardware module for checking if a zero bit is encountered;
a hardware module for returning a total number of the decoded bits, if a zero bit is encountered;
a hardware module for incrementing a counter counting the total number of the decoded bits, if a zero bit is not encountered; and
a hardware module for returning the total number of decoded bits, if a specified maximum number of bits were decoded.

11. The decoder of claim 8, wherein decoding the consecutive bits comprises:

a hardware module for advancing a state machine of a CABAC decoder for each bit in the consecutive most probable symbol bits without checking the value of each bit.

12. The decoder of claim 11, further comprising:

a hardware module for receiving a context value, the input compressed bitstream, and a CABAC decoder object, wherein the CABAC decoder object includes the range value and the offset value;
a hardware module for computing the subrange value using the range value and the offset value;
a hardware module for returning a decompressed output bit having a value equals to a most probable symbol bit value, if the minimum number of consecutive most probable symbol bits is greater than zero; and
a hardware module for returning a decompressed output bit having a value equals to a least probable symbol bit value, if the minimum number of consecutive most probable symbol bits is equal to zero.

13. The decoder of claim 12, wherein returning the decompressed output bit having a value equals to the most probable symbol bit value, further comprising:

a hardware module for computing a new range value by subtracting the range value from the subrange value;
a hardware module for performing a normalization process;
a hardware module for checking if a zero bit is encountered in the consecutive most probable symbol bits, upon completion of the normalization process;
a hardware module for iteratively advancing the state machine of the CABAC decoder for each bit in most probable consecutive symbol bits, if a zero bit is not encountered; and
a hardware module for returning a total number of decoded bits when the zero bit is encountered or a specified bit count is achieved.

## Patentansprüche

1. Eine Methode zur Decodierung von Transformationskoeffizienten, umfassend die Decodierung konsekutiver Bits eines eingehenden komprimierten Bitstreams unter Verwendung eines CABAC-Decoders, wobei diese konsekutiven Bits mit einem zu decodierenden Transformationskoeffizienten verbunden sind, und diese Decodierung die Berechnung (S310) einer Mindestanzahl konsekutiver wahrscheinlichster Symbolbits (mpbits) als mpbits=(Bereich - Abstand - 1)/Unterbereich umfasst, wobei der Bereich und Abstand einen Bereich und Abstand eines aktuellen Zustands des CABAC-Decoders definieren, und der Unterbereich unter Verwendung der Bereichs- und Kontextwerte des aktuellen Zustands des CABAC-Decoders berechnet wird, und wobei diese Decodierung weiter die Feststellung (S360) eines decodierten Werts dieser konsekutiven Bits dieser Mindestanzahl konsekutiver wahrscheinlichster Symbolbits entsprechend umfasst; Berechnung eines ersten Werts durch Erhöhung des decodierten Werts dieser konsekutiven Bits (S120) um einen Wert von eins; und entweder Zurückgeben des ersten Werts, wenn eine Gesamtanzahl decodierter Symbolbits weniger als eine vorgegebene Bitzahl ist (S160); oder Berechnung eines zweiten Werts, wenn die Gesamtzahl der decodierten Symbolbits der vorgegebenen Bitzahl entspricht, unter Decodierung des komprimierten EingangsBitstreams mit einem Exponential-Golomb-Code (S140) und Hinzufügen des ersten Werts zu einem Ergebnis, das durch die Exponential-Golomb-Code-Decodierung (S150) erzeugt wird; und

Zurückgeben des zweiten Werts (S160);

wobei die Bestimmung dieses decodierten Werts weiter für die Mindestanzahl konsekutiver wahrscheinlichster Symbolbits die Decodierung der wahrscheinlichsten Symbolbits mit demselben CABAC-Kontext und ohne Prüfung des Werts jedes wahrscheinlichsten Symbolbits (S360) umfasst.

2. Die Methode aus Anspruch 1, weiter umfassend

den Empfang eines Kontextwerts, den komprimierten Eingangsbitstream und ein CABAC-Decoderobjekt, wobei das CABAC-Decoderobjekt diesen Bereichswert und diesen Abstandswert umfasst;

die Berechnung dieses Unterbereichswerts;

die Berechnung eines neuen Bereichswerts durch Subtraktion des Unterbereichswerts vom Bereichswert;

die Prüfung, ob der Abstandswert weniger ist, als der neue Bereichswert;

Rückgabe eines dekomprimierten Ausgangssymbolbits mit einem Wert, der dem Wert des wahrscheinlichsten Symbolbits (MPS) entspricht, wenn der Abstand kleiner als der neue Bereichswert ist; und

die Rückgabe eines dekomprimierten Ausgangssymbolbits mit einem Wert, der dem Wert des unwahrscheinlichsten Symbolbits (LPS) Wert, entspricht, wenn der Abstand größer als oder gleich dem neuen Bereichswert ist.

3. Die Methode aus Anspruch 2, weiter umfassend

die Durchführung eines Renormalisierungsverfahrens;

die Prüfung, ob ein Zero-Bit auftritt;

die Rückgabe einer Gesamtzahl der decodierten Bits, wenn ein Zero-Bit auftritt;

das Hochzählen eines Zählers, der die Gesamtzahl der decodierten Bits zählt, wenn kein Zero-Bit auftritt; und

die Rückgabe der Gesamtzahl der decodierten Bits, wenn eine vorgegebene maximale Anzahl an Bits decodiert wurde.

4. Die Methode aus Anspruch 3, wobei die Durchführung des Renormalisierungsprozesses folgendes umfasst:

Konsekutives Einlesen neuer Bits aus dem komprimierten Eingabebitstream bis ein Bereichswert größer als ein vorgegebener Bereichswert oder gleich einem vorgegebenen Bereichswert (PRV) ist.

5. Die Methode aus Anspruch 1, wobei diese Decodierung weiter umfasst:

Die Weiterschaltung einer Zustandsmaschine des CABAC-Decoders für jedes Bit in den konsekutiven wahrscheinlichsten Symbolbits ohne Prüfung des Werts jedes Bits.

6. Die Methode aus Anspruch 5, weiter umfassend:

Den Empfang eines Kontextwerts, den komprimierten Eingabebitstream, und ein CABAC-Decoderobjekt, wobei das CABAC-Decoderobjekt den Bereichswert und den Abstandswert umfasst;

die Berechnung des Unterbereichswerts unter Verwendung des Bereichswerts und des Abstandswerts;

die Rückgabe eines dekomprimierten Ausgangsbits mit einem Wert in Höhe des wahrscheinlichsten Symbolbitwerts, wenn die Mindestanzahl konsekutiver wahrscheinlichster Symbolbits größer als Null ist; und

die Rückgabe eines dekomprimierten Ausgangsbits mit einem Wert in Höhe des unwahrscheinlichsten Symbolbitwerts, wenn die Mindestanzahl konsekutiver wahrscheinlichster Bits Null ist.

7. Die Methode aus Anspruch 6, wobei die Rückgabe des dekomprimierten Ausgangsbits dem Wert des wahrscheinlichsten Symbolbitwerts entspricht, weiter umfassend:

Die Berechnung eines neuen Bereichswerts durch Subtraktion des Bereichswerts vom Unterbereichswert;

die Durchführung eines Normalisierungsprozesses;

bei Abschluss des Normalisierungsprozesses, Prüfung, ob ein Zero-Bit in den konsekutiven wahrscheinlichsten Symbolbits auftritt;

iterative Weiterschaltung der Zustandsmaschine des CABAC-Decoders für jedes Bit in den wahrscheinlichsten konsekutiven Symbolbits, wenn kein Zero-Bit auftritt; und

Rückgabe einer Gesamtzahl decodierter Bits, wenn das Zero-Bit auftritt oder eine vorgegebene Bitzahl erreicht wird.

8. Ein Decoder für die Decodierung der Transformationskoeffizienten, umfassend:

Einen Decoder für kontextadaptive arithmetische Binärdaten-Codierung (context-adaptive binary data arithmetic coding; CABAC) für die Decodierung konsekutiver Bits eines komprimierten Eingangsbitstreams, wobei diese konsekutiven Bits mit einem zu decodierenden Transformationskoeffizienten verbunden sind, und wobei dieser Decoder ein Hardwaremodul für die Berechnung einer Mindestanzahl konsekutiver wahrscheinlichster Symbolbits (mpbits) als mpbits=(Bereich - Abstand - 1)/Unterbereich umfasst, wobei Bereich und Abstand einen Bereich und Abstand des aktuellen Zustands des CABAC-Decoders definieren und der Unterbereich unter Verwendung der Bereichs- und Kontextwerte des aktuellen Zustands des CABAC-Decoders und eines Hardwaremoduls für die Bestimmung eines Werts dieser konsekutiven Bits nach dieser Mindestanzahl konsekutiver wahrscheinlichster Symbolbits berechnet wird;

einen ersten Addierer zur Berechnung eines ersten Werts durch Addition von Eins zu dem decodierten Wert dieser konsekutiven Bits;

einen Komparator, um zu bestimmen, ob eine Gesamtzahl der decodierten Bits einer vorgegebenen Maximalzahl entspricht;

ein Hardwaremodul zur Rückgabe des ersten Werts, der aktiviert wird, wenn dieser Komparator die Information ausgibt, dass die Gesamtzahl der decodierten Bits geringer ist als die vorgegebene Maximalzahl;

einen Exponential-Golomb-Code-Decoder zur Decodierung des komprimierten Eingangsbitstreams, der aktiviert wird, wenn dieser Komparator eine Information ausgibt,

dass die Gesamtzahl der decodierten Bits der vorgegebenen Bitzählung entspricht; und

einen zweiten Addierer zur Erzeugung eines zweiten Werts durch Addition des ersten Werts zu einem Ergebnis, das durch den Exponential-Golomb-Code-Decoder erzeugt wurde, und

wobei für die Mindestanzahl konsekutiver wahrscheinlichster Symbolbits dieses Hardwaremoduls die Bestimmung weiter konfiguriert ist, um die wahrscheinlichsten Symbolbits mit demselben CABAC-Kontext und ohne Prüfung des Werts jedes wahrscheinlichsten Symbolbits (S360) zu decodieren.

9. Der Decoder aus Anspruch 8, weiter umfassend:

Ein Hardwaremodul zum Empfang eines Kontextwerts, des komprimierten Eingangsbitstreams und eines CABAC-Decoderobjekts, wobei das CABAC-Decoderobjekt den Bereichswert und den Abstandswert umfasst;

ein Hardwaremodul zur Berechnung des Unterbereichswerts;

ein Hardwaremodul zur Berechnung eines neuen Bereichswerts durch Subtraktion des Bereichswerts vom Unterbereichswert;

ein Hardwaremodul zur Prüfung, ob der Abstandswert weniger ist, als der neue Bereichswert;

ein Hardwaremodul zur Rückgabe eines dekomprimierten Ausgangsbits mit einem Wert, der dem Wert eines wahrscheinlichsten Symbolbits (MPS) entspricht, wenn der Abstand weniger ist als der neue Bereichswert; und

ein Hardwaremodul zur Rückgabe eines dekomprimierten Ausgangsbits mit einem Wert, der dem Wert eines unwahrscheinlichsten Symbolbits (LPS) entspricht, wenn der Abstand größer als der neue oder gleich dem neuen Bereichswert ist.

10. Der Decoder aus Anspruch 9, weiter umfassend:

Ein Hardwaremodul zur Durchführung eines Renormalisierungsprozesses;

ein Hardwaremodul zur Prüfung, ob ein Zero-Bit auftritt;

ein Hardwaremodul zur Rückgabe einer Gesamtzahl decodierter Bits, wenn ein Zero-Bit auftritt;

ein Hardwaremodul zur Erhöhung eines Zählers, der die Gesamtzahl der decodierten Bits zählt, wenn kein Zero-Bit auftritt; und

ein Hardwaremodul zur Rückgabe der Gesamtzahl decodierter Bits, wenn eine vorgegebene Maximalzahl Bits decodiert wurde.

11. Der Decoder aus Anspruch 8, wobei die Decodierung der konsekutiven Bits folgendes umfasst:

Ein Hardwaremodul zur Weiterschaltung einer Zustandsmaschine eines CABAC-Decoders für jedes Bit der konsekutiven wahrscheinlichsten Symbolbits ohne Prüfung des Werts jedes Bits.

**12.** Der Decoder aus Anspruch 11, weiter umfassend:

Ein Hardwaremodul zum Empfangen eines Kontextwerts, des komprimierten Eingangsbitstreams, und eines CABAC-Decoderobjekts, wobei das CABAC-Decoderobjekt den Bereichswert und den Abstandswert enthält; ein Hardwaremodul zur Berechnung des Unterbereichswerts unter Verwendung des Bereichswerts und des Abstandswerts;

ein Hardwaremodul zur Rückgabe eines dekomprimierten Ausgangsbits mit einem Wert, der dem Wert eines wahrscheinlichsten Symbolbits entspricht, wenn die Mindestanzahl konsekutiver wahrscheinlichster Symbolbits größer als Null ist; und

ein Hardwaremodul zur Rückgabe eines dekomprimierten Ausgangsbits mit einem Wert, der dem Wert eines unwahrscheinlichsten Symbolbits entspricht, wenn die Mindestanzahl konsekutiver wahrscheinlichster Symbolbits gleich Null ist.

**13.** Der Decoder aus Anspruch 12, wobei die Rückgabe des dekomprimierten Ausgangsbits im Wert dem Wert des wahrscheinlichsten Symbolbits entspricht, weiter umfassend:

Ein Hardwaremodul zur Berechnung eines neuen Bereichswerts durch Subtraktion des Bereichswerts von dem Unterbereichswert;

ein Hardwaremodul zur Durchführung eines Normalisierungsprozesses;

ein Hardwaremodul zur Prüfung, ob ein Zero-Bit in den konsekutiven wahrscheinlichsten Symbolbits auftritt, wenn der Normalisierungsprozess abgeschlossen ist;

ein Hardwaremodul zur iterativen Weiterschaltung der Zustandsmaschine des CABAC-Decoders für jedes Bit in den wahrscheinlichsten konsekutiven Symbolbits, wenn kein Zero-Bit auftritt; und

ein Hardwaremodul zur Rückgabe einer Gesamtzahl decodierter Bits, wenn das Zero-Bit auftritt oder eine vorgegebene Bitzählung erreicht wird.

**Revendications**

**1.** Procédé de décodage de coefficients de transformée, comprenant

le décodage de bits consécutifs d'un flux de bits d'entrée, compressé, à l'aide d'un décodeur CABAC, lesdits bits consécutifs étant associés à un coefficient de transformée à décoder, ledit décodage comprenant le calcul (S310) d'un nombre minimum de bits de symbole le plus probable (mpbits) consécutifs sous la forme mpbits = (plage - décalage - 1)/sous-plage, où les paramètres plage et décalage définissent une plage et un décalage d'un état actuel du décodeur CABAC, et le paramètre sous-plage est calculé à l'aide des valeurs de plage et de contexte de l'état actuel du décodeur CABAC, et ledit décodage comprend en outre la détermination (S360) d'une valeur décodée desdits bits consécutifs en fonction dudit nombre minimum de bits de symbole le plus probable consécutifs ;

le calcul d'une première valeur en ajoutant une unité à la valeur décodée desdits bits consécutifs (S120) ; et soit

le renvoi de la première valeur, si le nombre total de bits de symbole décodés est inférieur à un nombre de bits spécifié (S160) ; ou

le calcul d'une deuxième valeur, si le nombre total de bits de symbole décodés est égal au nombre de bits spécifié comprenant le décodage du flux de bits d'entrée, compressé, à l'aide d'un code exponentiel-Golomb (S140) et l'ajout de la première valeur à un résultat généré par le décodage du code exponentiel-Golomb (S150) ; et

le renvoi de la deuxième valeur (S160) ;

dans lequel la détermination de ladite valeur décodée comprend en outre pour le nombre minimum de bits de symbole le plus probable consécutifs le décodage des bits de symbole le plus probable avec le même contexte CABAC et sans vérifier la valeur de chaque bit de symbole le plus probable (S360).

**2.** Procédé selon la revendication 1, comprenant en outre

la réception d'une valeur de contexte, du flux de bits d'entrée, compressé, et d'un objet décodeur CABAC, dans laquelle l'objet décodeur CABAC inclut ladite valeur de plage et ladite valeur de décalage ;

le calcul de ladite valeur de sous-plage ;

le calcul d'une nouvelle valeur de plage en soustrayant la valeur de sous-plage de la valeur de plage ;

une vérification pour déterminer si la valeur de décalage est inférieure à la nouvelle valeur de plage ;

le renvoi d'un bit de symbole de sortie décompressé ayant une valeur égale à une valeur de bit de symbole le plus probable (MPS), si le décalage est inférieur à la nouvelle valeur de plage ; et

le renvoi d'un bit de symbole de sortie décompressé ayant une valeur égale à une valeur de bit de symbole le moins probable (LPS), si le décalage est supérieur ou égal à la nouvelle valeur de plage.

**3.** Procédé selon la revendication 2, comprenant en outre
l'exécution d'un processus de renormalisation ;
la détermination de la présence d'un bit zéro ;
le renvoi du nombre total de bits décodés si un bit zéro est présent ; l'incrémentation d'un compteur comptabilisant le nombre total de bits décodés si aucun bit zéro n'est présent ; et
le renvoi du nombre total de bits décodés si un nombre maximum spécifié de bits a été décodé.

**4.** Procédé selon la revendication 3, dans lequel l'exécution du processus de renormalisation comprend :

la lecture consécutive de nouveaux bits du flux de bits d'entrée, compressé, jusqu'à ce qu'une valeur de plage soit supérieure ou égale à une valeur de plage prédéfinie (PRV).

**5.** Procédé selon la revendication 1, dans lequel ledit décodage comprend en outre :

l'avancement d'une machine à états du décodeur CABAC pour chaque bit des bits de symbole le plus probable consécutifs sans vérifier la valeur de chaque bit.

**6.** Procédé selon la revendication 5, comprenant en outre :

la réception d'une valeur de contexte, du flux de bits d'entrée, compressé et d'un objet décodeur CABAC, dans laquelle l'objet décodeur CABAC inclut la valeur de plage et la valeur de décalage ;
le calcul de la valeur de sous-plage à l'aide de la valeur de plage et de la valeur de décalage ;
le renvoi d'un bit de sortie décompressé ayant une valeur égale à une valeur de bit de symbole le plus probable, si le nombre minimum de bits de symbole le plus probable consécutifs est supérieur à zéro ; et
le renvoi d'un bit de sortie décompressé ayant une valeur égale à une valeur de bit de symbole le moins probable, si le nombre minimum de bits de symbole le plus probable consécutifs est égal à zéro.

**7.** Procédé selon la revendication 6, dans lequel le renvoi du bit de sortie décompressé ayant une valeur égale à la valeur de bit de symbole le plus probable comprend en outre :

le calcul d'une nouvelle valeur de plage en soustrayant la valeur de plage de la valeur de sous-plage ;
l'exécution d'un processus de normalisation ;
à l'issue du processus de normalisation, la détermination de la présence d'un bit zéro dans les bits de symbole le plus probable consécutifs ;
l'avancement itératif de la machine à états du décodeur CABAC pour chaque bit des bits de symbole le plus probable consécutifs si aucun bit zéro n'est présent ; et
le renvoi du nombre total de bits décodés lorsqu'un bit zéro est présent ou qu'un nombre de bits spécifié est atteint.

**8.** Décodeur pour le décodage de coefficients de transformée, comprenant :

un décodeur de codage arithmétique de données binaires adaptatif selon le contexte (CABAC) pour décoder des bits consécutifs d'un flux de bits d'entrée, compressé, lesdits bits consécutifs étant associés à un coefficient de transformée à décoder, et ledit décodeur comprenant un module matériel pour calculer un nombre minimum de bits de symbole le plus probable (mpbits) consécutifs sous la forme mpbits = (plage - décalage - 1)/sous-plage, où les paramètres plage et décalage définissent une plage et un décalage de l'état actuel du décodeur CABAC et le paramètre sous-plage est calculé à l'aide des valeurs de plage et de contexte de l'état actuel du décodeur CABAC, et un module matériel pour déterminer une valeur desdits bits consécutifs en fonction dudit nombre minimum de bits de symbole le plus probable consécutifs ;
un premier additionneur pour calculer une première valeur en ajoutant une unité à la valeur décodée desdits bits consécutifs ;
un comparateur pour déterminer si le nombre total de bits décodés est égal à un nombre maximum spécifié ;
un module matériel pour renvoyer la première valeur activée lorsque ledit comparateur produit une information selon laquelle le nombre total de bits décodés est inférieur au nombre maximum spécifié ;
un décodeur de code exponentiel-Golomb pour décoder le flux de bits d'entrée, compressé, qui est activé lorsque ledit comparateur produit une information selon laquelle le nombre total de bits décodés est égal au nombre de bits spécifié ; et
un deuxième additionneur pour générer une deuxième valeur en ajoutant la première valeur à un résultat généré par le décodeur de code exponentiel-Golomb, et

dans lequel, pour le nombre minimum de bits de symbole le plus probable consécutifs, ledit module matériel de détermination est en outre configuré pour décoder les bits de symbole le plus probable avec le même contexte CABAC et sans vérifier la valeur de chaque bit de symbole le plus probable (S360).

9.  Décodeur selon la revendication 8, comprenant en outre :

un module matériel pour recevoir une valeur de contexte, le flux de bits d'entrée, compressé et un objet décodeur CABAC, dans lequel l'objet décodeur CABAC inclut la valeur de plage et la valeur de décalage ;
un module matériel pour calculer la valeur de sous-plage ;
un module matériel pour calculer une nouvelle valeur de plage en soustrayant la valeur de plage de la valeur de sous-plage ;
un module matériel pour vérifier si la valeur de décalage est inférieure à la nouvelle valeur de plage ;
un module matériel pour renvoyer un bit de sortie décompressé ayant une valeur égale à une valeur de bit de symbole le plus probable (MPS), si le décalage est inférieur à la nouvelle valeur de plage ; et
un module matériel pour renvoyer un bit de sortie décompressé ayant une valeur égale à une valeur de bit de symbole le moins probable (LPS), si le décalage est supérieur ou égal à la nouvelle valeur de plage.

10.  Décodeur selon la revendication 9, comprenant en outre :

un module matériel pour exécuter un processus de renormalisation ;
un module matériel pour déterminer la présence d'un bit zéro ;
un module matériel pour renvoyer le nombre total de bits décodés si un bit zéro est présent ;
un module matériel pour incrémenter un compteur comptabilisant le nombre total de bits décodés si aucun bit zéro n'est présent ; et
un module matériel pour renvoyer le nombre total de bits décodés si un nombre maximum spécifié de bits a été décodé.

11.  Décodeur selon la revendication 8, dans lequel le décodage des bits consécutifs comprend :

un module matériel pour avancer une machine à états d'un décodeur CABAC pour chaque bit des bits de symbole le plus probable consécutifs sans vérifier la valeur de chaque bit.

12.  Décodeur selon la revendication 11, comprenant en outre :

un module matériel pour recevoir une valeur de contexte, le flux de bits d'entrée, compressé et un objet décodeur CABAC, dans lequel l'objet décodeur CABAC inclut la valeur de plage et la valeur de décalage ;
un module matériel pour calculer la valeur de sous-plage à l'aide de la valeur de plage et de la valeur de décalage ;
un module matériel pour renvoyer un bit de sortie décompressé ayant une valeur égale à une valeur de bit de symbole le plus probable, si le nombre minimum de bits de symbole le plus probable consécutifs est supérieur à zéro ; et
un module matériel pour renvoyer un bit de sortie décompressé ayant une valeur égale à une valeur de bit de symbole le moins probable, si le nombre minimum de bits de symbole le plus probable consécutifs est égal à zéro.

13.  Décodeur selon la revendication 12, dans lequel le renvoi du bit de sortie décompressé ayant une valeur égale à la valeur de bit de symbole le plus probable comprend en outre :

un module matériel pour calculer une nouvelle valeur de plage en soustrayant la valeur de plage de la valeur de sous-plage ;
un module matériel pour exécuter un processus de normalisation ;
un module matériel pour vérifier si un bit zéro est présent dans les bits de symbole le plus probable consécutifs à l'issue du processus de normalisation ;
un module matériel pour avancer de manière itérative la machine à états du décodeur CABAC pour chaque bit des bits de symbole le plus probable consécutifs si aucun bit zéro n'est présent ; et
un module matériel pour renvoyer le nombre total de bits décodés lorsqu'un bit zéro est présent ou qu'un nombre de bits spécifié est atteint.

```
                    ┌─────────────┐
                    │    Start    │            ╭─ 100
                    └─────────────┘          /
                           │
                           ▼              S110
          ┌─────╥──────────────────────╥─────┐
          │     ║       total-bits      ║     │
          │     ║ decode_consecutive(cabac, ║ │
          │     ║   bitstream, context)  ║    │
          └─────╨──────────────────────╨─────┘
                           │
                           ▼              S120
          ┌──────────────────────────────────┐
          │    Symbol_val = 1+total-bits      │
          └──────────────────────────────────┘
                           │
                           ▼            S130
                      ╱╲
                     ╱  ╲          No
               ╱ symbol_val == ╲──────────┐
               ╲    max?      ╱            │
                ╲            ╱             │
                 ╲╱                        │
                   │ Yes                   │
                   ▼            S140       │
          ┌─────╥──────────────────────╥─┐│
          │     ║  Decoded_bitstream    ║ ││
          │     ║ get_exp_golomb(cabac, ║ ││
          │     ║     bitstream)        ║ ││
          └─────╨──────────────────────╨─┘│
                   │            S150       │
          ┌──────────────────────────────┐│
          │        Symbol_Val =          ││
          │        Symbol_Val            ││
          │            +                 ││
          │      Decoded_bitstream       ││
          └──────────────────────────────┘│
                   │            S160       │
          ┌──────────────────────────────┐│
          │      Return symbol_val        │◄┘
          └──────────────────────────────┘
                   │
                   ▼
            ┌─────────────┐
            │     End     │
            └─────────────┘
```

FIG. 1

```
                    ┌─────────────┐
                    │    Start    │
                    └──────┬──────┘
                           │         ⌐S110
                           ▼  S205
      ┌──────────────────────────────────────┐
      │          Calculate sub-range          │
      └──────────────────┬────────────────────┘
                         │  S210
              / range = range - sub-range /
                         │
                         ▼  S215                    S235
                  ╱ offset  ╲       No        / bit = 1 - mps /
                 ╱  < range? ╲──────────────▶
                  ╲          ╱                        │
                   ╲        ╱                         │  S240
                     │ Yes  S220              ┌─────────────────────┐
                     ▼                        │  Update mps and state │
              / bit = mps /                   │ (table lookup based on│
                     │                        │     LPS decode)       │
                     │  S230                  └──────────┬───────────┘
           ┌──────────────────┐                         │  S245
           │  Update state     │            / offset = offset - range  /
           │ (table lookup     │            /     range = sub-range     /
           │  based on MPS     │
           │    decode)        │
           └─────────┬─────────┘
                     │  S250                          S255
                  ╱ range ╲        Yes       / range = range * 2      /
                 ╱  < PRV? ╲──────────────▶  / offset = offset * 2 +  /
                  ╲        ╱                 / get_new_bit(bitstream)  /
                     │ No
                     ▼  S260            No             S270
           Yes    ╱ bit ╲              / total_bits = total_bits + 1 /
         ◀───────╱ == 0? ╲──────────▶
                  ╲      ╱                              │
                     │ No                              │
              No  ╱ S275 ╲                             │
             ◀──╱ total_bits ╲◀────────────────────────┘
                ╲  == l ?    ╱
                     │ Yes
                     ▼  S265
            / Return total_bits /
                     │
                     ▼
              ┌─────────────┐
              │     End     │
              └─────────────┘
```

FIG. 2

S110

FIG. 3

FIG. 4